Europäisches Patentamt

European Patent Office

Office européen des brevets

(11) Numéro de publication : **0 050 545**
**B1**

(12) **FASCICULE DE BREVET EUROPÉEN**

(45) Date de publication du fascicule du brevet :
20.08.86

(21) Numéro de dépôt : **81401542.6**

(22) Date de dépôt : **06.10.81**

(51) Int. Cl.⁴ : **G 02 B   6/12, G 02 B   6/42**

(54) **Lentille de Fresnel intégrée et son procédé de fabrication.**

(30) Priorité : **08.10.80 FR 8021476**

(43) Date de publication de la demande :
**28.04.82 Bulletin 82/17**

(45) Mention de la délivrance du brevet :
**20.08.86 Bulletin 86/34**

(84) Etats contractants désignés :
**DE GB IT NL**

(56) Documents cités :
EP-A- 0 021 993
APPLIED PHYSICS LETTERS, vol. 33, no. 6, 15 septembre 1978, NEW YORK (US), P.R. ASHLEY et al. "Fresnel lens in a thin-film waveguide", pages 490-492
APPLIED PHYSICS LETTERS, vol. 35, no. 3, 1er août 1979, NEW YORK (US), A. NAUMAAN et al. "A geodesic optical waveguide lens fabricated by anisotropic etching", pages 234-236
IEEE JOURNAL OF QUANTUM ELECTRONICS, vol. QE-16, no. 7, juillet 1980, NEW YORK (US), W.S.C. CHANG et al. "Fresnel lenses in optical waveguides", pages 744-754

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Valette, Serge**
**Commissariat a l'Energie Atomique 24, rue Turenne**
**F-38000 Grenoble (FR)**

(74) Mandataire : **Mongrédien, André et al**
**c/o BREVATOME 25, rue de Ponthieu**
**F-75008 Paris (FR)**

## Description

La présente invention concerne une lentille de Fresnel et son procédé de fabrication. Cette lentille est destinée à fonctionner dans des structures d'optique intégrée.

Les techniques de traitement et/ou de transmission à distance de l'information étudiées depuis quelques années, utilisent la transmission par ondes lumineuses dans des guides de lumière à structure plane. Ces techniques sont couramment appelées « optique intégrée ».

Un guide de lumière de conception simple est en général constitué d'un substrat d'indice de réfraction $n_s$ recouvert d'une couche guidante d'indice de réfraction réel $n_g$ en général supérieur à l'indice de réfraction du substrat. L'air, d'indice de réfraction inférieur à l'indice de réfraction réel de la couche guidante, complète la structure. Pour un tel guide, on définit un indice effectif $n_{eff} = C/V$, où v représente la vitesse de propagation de la lumière dans le guide d'ondes et c la vitesse de propagation de la lumière dans le vide.

La valeur de l'indice effectif dépendant de la valeur des différents indices des couches constituant le guide de lumière ainsi que de leur épaisseur, il en résulte qu'en optique intégrée la vitesse d'une onde lumineuse peut être modifiée soit par des variations de l'indice soit par des variations d'épaisseur des différentes couches en présence.

Par transposition des phénomènes connus en optique classique, on a cherché à réaliser sous forme de composants intégrés des structures équivalentes aux structures classiques pour permettre la propagation de la lumière. L'un des premiers composants que l'on a cherché à réaliser est une lentille intégrée.

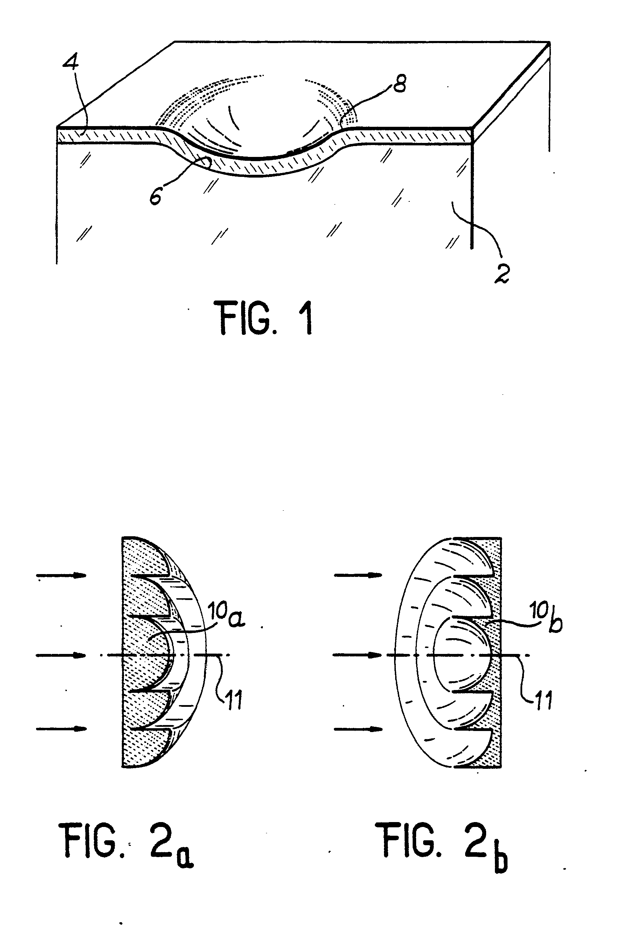

Les lentilles actuellement connues sont des lentilles de type géodésique. Une telle lentille est représentée sur la figure 1.

Cette lentille est consituée d'un substrat 2, par exemple en niobate de lithium, dans lequel, après avoir réalisé un guide de lumière 4, on a effectué une dépression 6 présentant une géométrie parfaitement définie.

Cette lentille est constituée d'un substrat 2, par exemple en n iobate de lithium, dans lequel, après d'inconvénients technologiques.

De plus, les méthodes employées pour la réalisation de cette lentille (micropolissage par ultrasons) ne sont pas compatibles avec les méthodes de réalisation des autres composants que l'on désire associer à cette lentille pour l'obtention des systèmes optiques plus ou moins complexes tels qu'un analyseur spectral, les méthodes de réalisation de ces composants étant principalement la photolithogravure, la gravure chimique etc...

En particulier le positionnement de la lentille par rapport aux différents composants associés est difficilement réalisable.

De plus, il est très difficile d'éviter les défauts au niveau des arêtes 8 de la lentille de la figure 1. Ces défauts entraînent une forte diffraction de la lumière qui nuit généralement à la qualité de ladite lentille.

L'invention a donc pour objet une lentille intégrée et son procédé de fabrication permettant de remédier à ces différents inconvénients. Cette lentille est du type lentille de Fresnel.

Une lentille de Fresnel est régie par l'association de deux éléments, un plan diffractant et un déphasage particulier associé à chaque point du plan diffractant tel que pour un point F du guide d'onde, pour lequel la lentille est réalisée, tous les faisceaux lumineux diffractés qui convergent en ce point se retrouvent en interférences constructives. Le point F constitue le foyer de la lentille.

En optique classique une lentille de Fresnel, représentée en perspective sur les figures 2a et 2b peut être formée par une suite d'anneaux en forme de portion de ménisques 10, soit plans-convexes 10a, soit plans-concaves 10b. Les portions de ménisques 10 présentent une longueur $L(r)$ dépendant de la distance r à l'axe 11 de la lentille. Le déphasage produit par de telles structures varie selon l'épaisseur de matière traversée, c'est-à-dire que le déphasage dépend de la longueur $L(r)$ des portions de ménisques.

De façon générale, si p, respectivement p' représente la distance entre le point objet, respectivement le point image et la lentille on a :

(a)
$$L(r) = mL_0 - \frac{L_0}{\lambda_0}\left[\sqrt{r^2 + p'^2} - p' + \sqrt{r^2 + p^2} - p\right]$$

si la variation de l'indice δn est positif pour une lentille convergente et si δn est négatif pour une lentille divergente, et

(b)
$$L(r) = mL_0 + \frac{L_0}{\lambda_0}\left[\sqrt{r^2 + p'^2} - p' + \sqrt{r^2 + p^2} - p\right]$$

si la variation d'indice δn est négatif pour une lentille convergente et si δn est positif pour une lentille divergente.

Dans le cas particulier d'un point objet situé à l'infini p' est égal à la distance focale f de la lentille et les formules deviennent :

2

$$L(r) = mL_0 - \frac{L_0}{\lambda_0}\left[\sqrt{r^2 + f^2} - f\right]$$

dans le premier cas (figure 2a) et

$$L(r) = mL_0 + \frac{L_0}{\lambda_0}\left[\sqrt{r^2 + f^2} - f\right]$$

dans le deuxième cas (figure 2b).

Dans ces formules, f représente la distance focale de la lentille, $\lambda_0$ la longueur d'onde dans le vide de la radiation utilisée et m un entier représentant le rang de l'anneau considéré. L'entier m est augmenté d'une unité chaque fois que L(r) s'annule, c'est-à-dire chaque fois qu'on passe d'un anneau au suivant. Le rang m peut être pris égal à 1 pour r = 0, ce qui donne au centre une longueur L(r) = $L_0$.

dans les deux cas, la longueur $L_0$ est prise de telle sorte qu'on ait un déphasage de $2\pi$ sur l'axe de la lentille, c'est-à-dire que

$$2\pi\frac{\delta n\, L_0}{\lambda} = 2\pi,$$

avec $\lambda$ la longueur d'onde utilisée.

Il est à noter que dans ces formules la longueur L(r) des portions de ménisques 10 est définie à $L_0$ près, c'est-à-dire à $2\pi$ près.

L'invention se rapporte à une lentille de Fresnel en optique intégrée réalisée à partir d'un guide de lumière comme décrit précédemment.

Cette lentille de Fresnel pour optique intégrée, comprend un guide de lumière d'indice effectif $n_{eff}$ comportant une couche guidante et un nombre N de régions échelonnées le long de la direction perpendiculaire à l'axe de la lentille et présentant un indice de réfraction tel que, au droit de ces régions, l'indice effectif du guide de lumière présente une valeur $n'_{eff}$ différente de $n_{eff}$ de façon qu'une onde lumineuse, susceptible de se propager au droit de ces régions acquière un déphasage $\Delta\varphi$, fonction de la longueur, mesurée selon la direction de l'axe de la lentille, desdites régions et dû à la différence d'indice effectif $n'_{eff} - n_{eff}$, ce déphasage permettant d'obtenir des interférences lumineuses constructives au point image choisi :

Une telle lentille intégrée est notamment décrite dans le document IEEE Journal of Quantum Electronics, vol. QE-16, n° 7 (1980), pages 744-754 et dans le document EP-A-2 1993 ; ce dernier n'est opposable qu'au titre de l'article 54 de la C.B.E.

Selon l'invention, la lentille de Fresnel intégrée se caractérise en ce que les régions présentent la forme de portions de ménisques convexes ou concaves de longueur L(r) mesurée selon la direction de l'axe de la lentille et dépendant continuement de la distance r à l'axe de la lentille, en ce qu'elles sont implantées à l'intérieur de la couche guidante, et en ce que la différence entre les déphasages maximal et minimal acquis dans chaque région est de $2\pi$.

Selon un mode préféré de l'invention, le guide de lumière est constitué par du niobate de lithium.

L'invention concerne aussi un procédé de fabrication d'une telle lentille de Fresnel.

Ce procédé, consistant à réaliser dans un substrat un guide de lumière d'indice effectif $n_{eff}$ comportant une couche guidante et à réaliser un nombre N de régions échelonnées le long de la direction perpendiculaire à l'axe de la lentille, présentant un indice de réfraction tel que, au droit de ces régions, l'indice effectif du guide de lumière présente une valeur $n'_{eff}$ différente de $n_{eff}$ de façon qu'une onde lumineuse susceptible de se propager au droit de ces régions acquière un déphasage $\Delta\varphi$, fonction de la longueur, mesurée selon la direction de l'axe de la lentille, desdites régions et dû à la différence d'indice effectif $n'_{eff} - n_{eff}$, ce déphasage permettant d'obtenir des interférences lumineuses constructives au point d'image choisi, se caractérise en ce que l'on réalise les N régions par implantation ionique dans la couche guidante sous la forme de portions de ménisques convexes ou concaves de longueur L(r), memsurée selon la direction de l'axe de la lentille et dépendant continuement de la distance r à l'axe de la lentille, la différence entre les déphasages maximal et minimal acquis dans chaque région étant de $2\pi$.

Bien entendu, tous moyens permettant la réalisation des N régions peuvent être envisagés et selon un mode préféré de ce procédé de fabrication, on réalise lesdites régions en implantant des ions de bore ou d'hélium.

Il est bien connu qu'une implantation ionique dans un substrat en niobate de lithium crée une diminution importante de l'indice de réfraction de celui-ci.

Cette diminution de l'indice de réfraction par implantation ionique est décrite de façon détaillée dans une thèse soutenue le 26 septembre 1978 devant l'U.S.M. de Grenoble et l'I.N.P.G. par Monsieur Destéfanis, intitulée « Etude de la modification des propriétés optiques induite par implantation ionique dans le niobate de lithium. Application à la réalisation de guides d'onde ».

Ce procédé de fabrication d'une lentille de Fresnel pour optique intégrée permet une localisation très précise des modifications d'indice que l'on désire obtenir. Ceci est très important dans le cas d'une lentille de Fresnel intégrée du fait que les bords extrêmes d'une telle lentille peuvent être situés à une distance l'un de l'autre voisine de 1 μm au moins.

L'utilisation de l'implantation ionique permet de modifier les indices de réfraction de façon importante et donc de réaliser dans le niobate de lithium des lentilles de Fresnel intégrées présentant des régions implantées de longueur maximale $L_0$ faible permettant de se rapprocher ainsi de la lentille idéale.

De plus, ce procédé de fabrication est facile à mettre en œuvre et présente une reproductibilité parfaite.

D'autres caractéristiques et avantages de l'invention ressortiront mieux de la description qui va suivre, donnée à titre purement illustratif et non limitatif, en référence aux figures annexées, dans lesquelles :

la figure 1 déjà décrite représente schématiquement une lentille utilisée en optique intégrée de l'art antérieur ;

la figure 2 déjà décrite représente schématiquement en perspective une lentille de Fresnel en optique classique ;

la figure 3 représente schématiquement le procédé de réalisation d'une lentille de Fresnel selon l'invention ;

la figure 4 représente schématiquement les variations de l'indice de réfraction ordinaire ($\Delta_{no}$) en fonction de la dose d'ions hélium implantés par centimètre carré (D) dans un substrat en niobate de lithium ;

la figure 5 représente schématiquement les variations de l'indice de réfraction effectif ($\delta n_{eff}$) du niobate de lithium en fonction de la hauteur des régions implantées (h) exprimée en micromètre (courbe a) et les variations de la longueur (L) desdites régions correspondantes pour obtenir un déphasage de $2\pi$ (figure b) ;

la figure 6 représente une lentille de Fresnel en optique intégrée, selon l'invention.

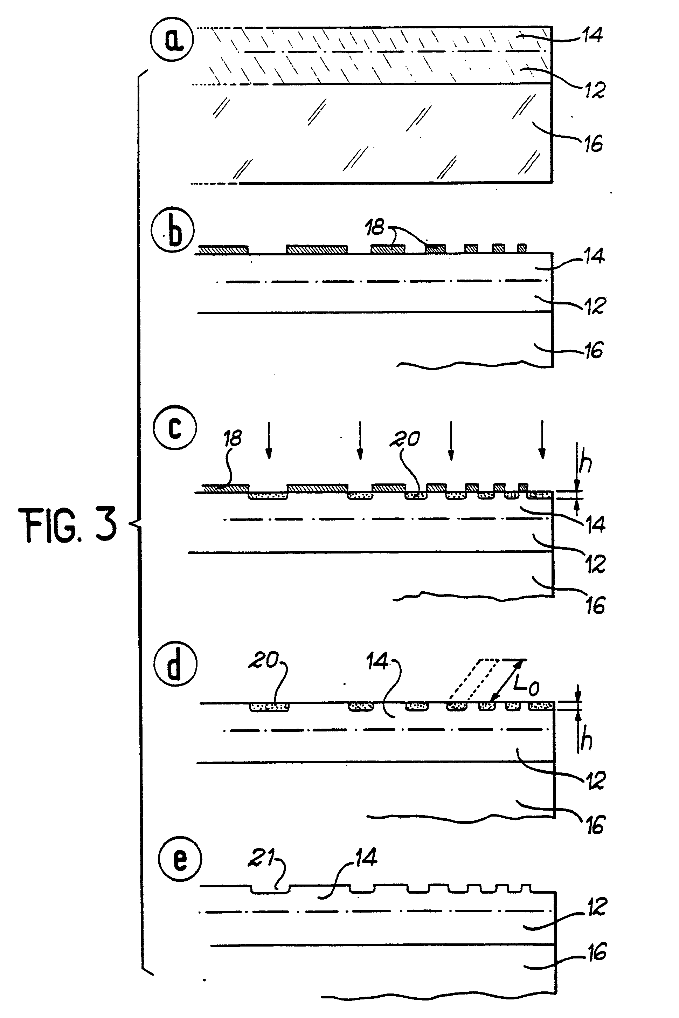

La figure 3 représente un procédé de fabrication d'une lentille de Fresnel selon l'invention.

La première étape (figure 3a) consiste à réaliser un guide de lumière dans un substrat de préférence en niobate de lithium. Ce guide peut être réalisé soit par diffusion (de titane ou d'un autre métal, le nickel par exemple), soit par implantation ionique à haute énergie.

La réalisation du guide de lumière dans un substrat en niobate de lithium par implantation ionique consiste à créer une diminution de l'indice de réfraction du substrat dans une zone enterrée 12. Cette zone enterrée 12 est alors prise en sandwich entre deux couches 14 et 16 d'indice de réfraction supérieur à celui de la couche 12.

Dans un substrat dans lequel l'implantation ionique crée une diminution de l'indice de celui-ci, il est nécessaire de créer une zone enterrée 12 de façon que la couche guidante 14 soit prise en sandwich entre la couche 12 formant substrat et l'air, tous deux d'indice de réfraction inférieur à l'indice de réfraction réel de la couche guidante 14.

En revanche, dans un substrat dans lequel l'implantation ionique crée une augmentation de l'indice de réfraction tel que dans la silice, la réalisation du guide de lumière se fait en créant une augmentation de l'indice de réfraction du substrat dans une zone en surface 14 de façon que la couche guidante 14 soit prise en sandwich entre le substrat 16 et l'air, tous deux d'indice de réfraction inférieur à l'indice de réfraction réel de la couche guidante 14.

L'implantation ionique dans un substrat en niobate de lithium permet d'obtenir une importante diminution de l'indice de réfraction ordinaire et extraordinaire. Bien entendu, la variation de l'indice dépend de la dose d'ions implantés (nombre d'ions implantés par centimètre carré).

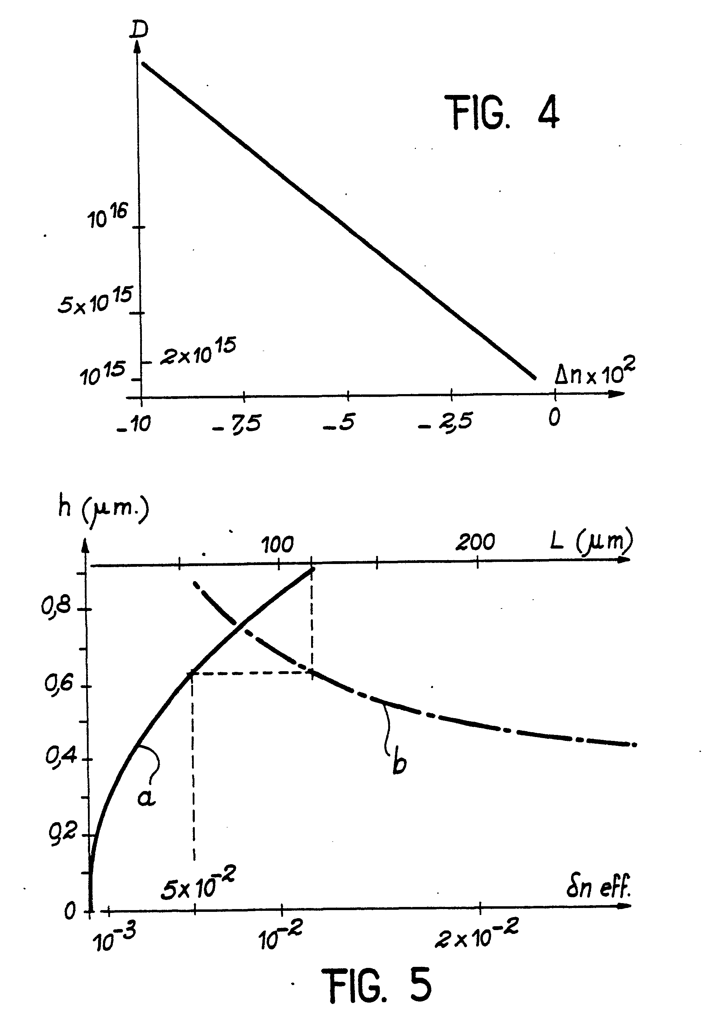

La courbe représentée sur la figure 4 indique les variations de l'indice de réfraction ordinaire ($\Delta_{no}$) du niobate de lithium en fonction de la dose (D), exprimée en ions par $cm^2$, d'ions hélium implantés dans celui-ci, cette implantation ayant lieu à température ambiante. Par exemple, pour une dose de $5.10^{15}$ ions par $cm^2$, on obtient un $\Delta_{no}$ de l'ordre de $-2,5 \times 10^{-2}$, ce qui représente une diminution importante de l'indice de réfraction.

Lorsque le guide de lumière présente une couche enterrée 12, il est nécessaire que la hauteur de celle-ci soit suffisamment grande. En effet, dans cette couche enterrée, la lumière se propage sous forme d'onde évanescente de décroissance exponentielle en fonction de la profondeur de pénétration de l'onde évanescente dans ladite couche enterrée. Pour éviter les pertes de lumière via cette onde évanescente, il faut que la couche 12 soit plus épaisse que ladite profondeur de pénétration de l'onde évanescente dans celle-ci.

Dans le cas d'un substrat en niobate de lithium en coupe Z, une implantation de $5.10^{15}$ $cm^{-2}$ d'ions hélium avec une énergie comprise entre 400 keV et 2 MeV, produit un guide de lumière de 1,2 μm d'épaisseur, isolé du substrat par une épaisseur de 1,8 μm. Cette structure citée en exemple est monomode à la longueur d'onde 0,632 8 μm.

Le guide de lumière étant réalisé, on dépose sur la couche 14 un masque protecteur 18 constitué par une couche gravée suivant la géométrie que l'on désire obtenir (figure 3b). Cette couche 18 peut être constituée soit d'une résine photosensible, soit en or, soit en aluminium,...

L'étape suivante (figure 3c) du procédé selon l'invention, consiste à implanter des ions à travers le masque protecteur 18, soit en surface du guide de lumière comme schématisé sur la figure 3c, soit dans

4

une zone légèrement enterrée. La profondeur d'implantation des ions dans la couche guidante 14 dépend de l'énergie apportée sur le substrat par les faisceaux d'ions à implanter.

Dans le cas d'une implantation dans un substrat en niobate de lithium, les régions 20 ainsi créées présentent comme précédemment un indice de réfraction inférieur à l'indice de réfraction réel de la couche 14.

Les ions implantés sont par exemple des ions d'hélium ou de bore. Comme précédemment, la variation d'indice dans la couche guidante 14 dépend de la dose d'ions implantée (figure 4). En conséquence, pour une même dose d'ions hélium implantée, l'indice de réfraction des régions 20 est égal à l'indice de réfraction de la couche 12. Bien entendu, ceci ne constitue qu'un exemple particulier.

La figure 3d représente l'étape suivante du procédé. Cette étape consiste à enlever le masque protecteur 18 par exemple au moyen d'une attaque chimique. Cette figure représente donc, en coupe, une lentille de Fresnel selon l'invention. Les p régions implantées 20 présentent en coupe la forme de rectangles de hauteur h et dont la longueur L(r) est située parallèlement à l'axe de la lentille.

Ces régions 20 d'indice de réfraction inférieur à l'indice de réfraction réelle de la couche 14 permettent de modifier, sur toute la longueur L(r) desdites couches, l'indice effectif $n_{eff}$ du guide lumière. Sous ces régions l'indice effectif prend une valeur $n'_{eff}$. Une onde lumineuse guidée qui se propage sur la longueur L(r) acquiert par conséquent, par rapport à la phase qu'elle avait dans la structure initiale (sans les régions implantées) un déphasage :

$$\Delta\varphi = \frac{2\pi\,\delta n_{eff}\,L(r)}{\lambda_0}$$

formule dans laquelle $\delta n_{eff} = n'_{eff} - n_{eff}$ et $\lambda_0$ la longueur d'onde dans le vide de la radiation lumineuse utilisée. Ce déphasage $\Delta\varphi$ tient compte à la fois du déphasage causé par la variation d'indice effectif $\delta n_{eff}$ et du déphasage causé par l'épaisseur de matière traversée.

Ces régions 20 permettent donc de modifier localement le déphasage d'une onde guidée par changement de la structure du guide de lumière et d'obtenir ainsi une lentille de Fresnel du type à déphasage.

L'obtention d'un déphasage convenable, pour obtenir des interférences constructives au foyer de la lentille, dépend comme on l'a vu précédemment, de la variation de l'indice effectif du guide de lumière $\delta n_{eff}$ et de la longueur L(r) des régions 20.

En fait pour obtenir avec une lentille de Fresnel intégrée des interférences constructives au foyer de la lentille on fixe le déphasage $\Delta\varphi$ qui doit être égal à $2\pi$, ce qui implique que la longueur $L_0$ desdites régions est reliée à $\delta n_{eff}$ par l'expression : $\delta n_{eff}\,L_0 = \lambda_0$.

La figure 3e qui correspond à une étape supplémentaire du procédé selon l'invention permet d'obtenir une lentille de Fresnel selon une variante dans laquelle les régions 20 se présentent sous forme de creux 21. Cette étape supplémentaire consiste à attaquer chimiquement les régions implantées 20. Lorsque le guide de lumière est réalisé en niobate de lithium, cette attaque chimique est obtenue avec de l'acide fluorhydrique dilué. En effet, les régions 20 implantées dans le niobate de lithium sont sensibilisées à une telle attaque chimique. Cette sensibilisation est d'ailleurs illustrée dans la thèse de Monsieur Destéfanis précédemment citée. Bien entendu, de telles lentilles de Fresnel ne peuvent être obtenues que si les régions 20 sont situées en surface du guide de lumière, c'est-à-dire sur une certaine profondeur h de la couche guidante 14 et au contact de la surface de ladite couche. Il est à noter que dans cette variante, la variation en fonction de h de l'indice effectif du guide de lumière est différente de celle obtenue dans les lentilles de Fresnel décrite précédemment, c'est-à-dire celles qui sont représentées sur la figure 3d.

Dans ce mode de réalisation ainsi que dans celui décrit précédemment, la variation de l'indice effectif du guide de lumière dépend de la hauteur h des régions implantées 20.

Pour obtenir un déphasage convenable, il est nécessaire de contrôler avec précision la hauteur h et la longueur L des régions 20 ainsi que la variation de l'indice ordinaire $\Delta_{no}$.

Le contrôle de ces différents paramètres est facile à réaliser en utilisant l'implantation ionique. En effet, la variation de l'indice $\Delta_{no}$ dépend de la dose d'ions implantés (figure 4) et la hauteur h dépend de l'énergie apportée sur le substrat lors de cette implantation.

En ce qui concerne la longueur L, le contrôle de ce paramètre dépend directement du masque 18 utilisé. Le masque réalisé par photogravure permet d'obtenir des longueurs L avec une précision supérieure au micron.

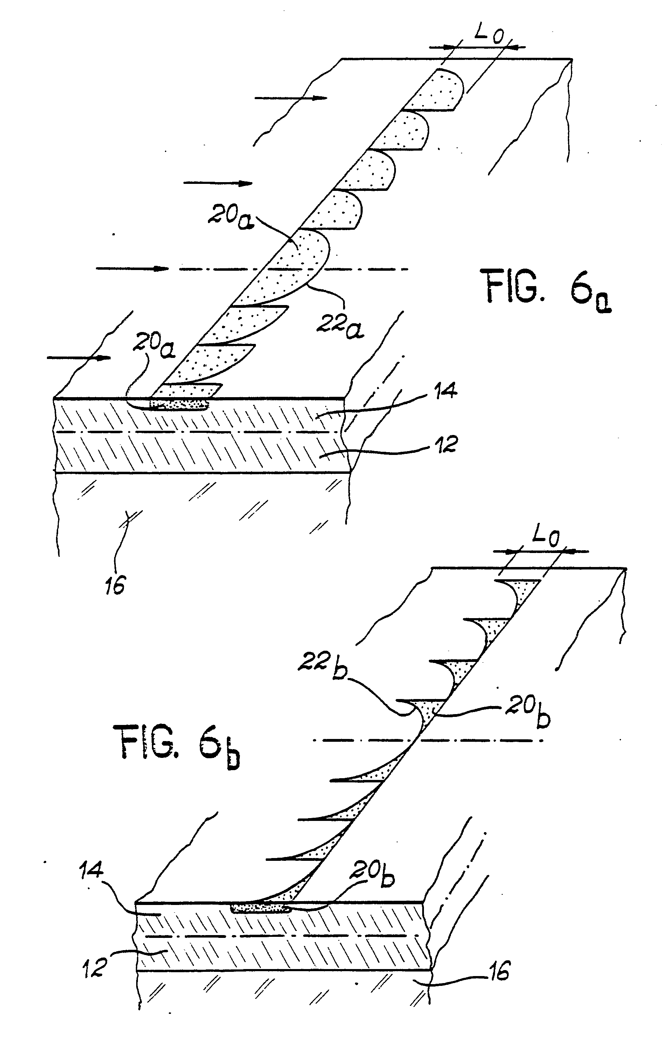

Il est à noter que le déphasage $\Delta\varphi$ convenable pour obtenir des interférences constructives au foyer de la lentille est égal à $2\pi$ dans l'exemple illustré sur la figure 5. Ce déphasage de $2\pi$ correspond au mode de réalisation des lentilles de Fresnel schématisé sur la figure 6.

Ces modes de réalisation correspondent à une lentille de Fresnel idéale dans laquelle les régions implantées se présentent sous forme de portion de ménisques soit plans-convexes (figure 6a), ce qui correspond au cas où $\delta n_{eff}$ est positif, soit plans-concaves (figure 6b), ce qui correspond au cas où $\delta n_{eff}$ est négatif et par exemple au cas de l'implantation d'ions dans le niobate de lithium.

Dans ces modes de réalisation, la face arrière des régions 20 à section rectangulaire de la figure 3 est

5

une face convexe 22a, comme représenté sur la figure 6a, et la face avant desdites régions 20 un face concave 22b, comme représenté sur la figure 6b.

La longueur L des régions 20a et 20b est régie par les formules des lentilles de Fresnel réalisées en optique classique où δn est remplacé par δn$_{eff}$. La formule (a) exprimée précédemment, correspond à une lentille convergente et à une variation de l'indice effectif δn$_{eff}$ positive et la formule (b) exprimée précédemment, correspond à une lentille convergente et à une variation de l'indice effectif δn$_{eff}$ négative.

La longueur L(r) des régions 20a et 20b est prise de telle sorte qu'on ait un déphasage de 2π sur l'axe de ladite lentille. On a donc :

$$\frac{2\pi}{\lambda_0} \delta n_{eff} L_0 = 2\pi .$$

Les variations du δn$_{eff}$ en fonction de la hauteur h sont représentées sur la figure 5. De même, sur cette figure sont représentées les variations de la longueur L desdites régions correspondant au déphasage Δφ = 2π que l'on désire obtenir.

La courbe a montre les variations de l'indice effectif du guide de lumière δn$_{eff}$ en fonction de la hauteur h exprimée en micromètre (μm). La longueur L que doivent posséder les régions 20, pour un δn$_{eff}$ donné, de façon à obtenir un déphasage des vibrations lumineuses permettant l'obtention d'interférences constructives, peut être directement calculée à partir de la courbe b. Le fait d'avoir porté la courbe a et la courbe b sur la même figure permet de relier directement la longueur L à la variation de l'indice effectif.

Par exemple pour un δn$_{eff}$ de $5 \times 10^{-3}$ on trouve que L doit être égale à 120 μm.

Au lieu de réaliser des régions 20a et 20b dont la longueur L(r) correspond rigoureusement aux relations (a) et (b), il peut être suffisant de les satisfaire de manière approchée.

De plus, la réalisation d'une lentille de Fresnel selon l'invention peut être réalisée sur un substrat autre que du niobate de lithium comme par exemple un substrat en quartz ou en silice fondue.

Il est à noter que l'implantation à forte dose pour la réalisation de la lentille selon l'invention permet de réaliser des variations d'indice ordinaire (Δ$_{no}$) important et par voie de conséquence des variations importantes de δn$_{eff}$. Ceci permet de travailler avec des longueurs de régions 20 faibles et de se rapprocher de la lentille de Fresnel idéale, c'est-à-dire sans épaisseur. En revanche, les temps d'implantation deviennent prohibitifs pour une dose implantée supérieure à $10^{16}$ ions par cm$^2$ dans le cas d'un substrat en niobate de lithium. Un compromis est donc nécessaire et des doses implantées comprises entre $10^{15}$ et $10^{16}$ ions/cm$^2$ semblent parfaitement adaptées pour la réalisation de lentilles de Fresnel dans le niobate de lithium selon l'invention.

Il convient de noter que les régions localisées d'indice de réfraction différent aptes à mettre en œuvre l'invention, ne sont pas obligatoirement situées en surface de la couche guidante ; elles peuvent être également en profondeur dans la couche guidante.

Il suffit, pour mettre en œuvre l'invention, que ces régions d'indice différent créent dans la couche guidante des variations d'indice effectif permettant de créer les déphasages correspondant aux conditions de Fresnel, soit de manière exacte, soit de manière approchée.

### Revendications

1. Lentille de Fresnel pour optique intégrée comprenant un guide de lumière (12, 14, 16) d'indice effectif n$_{eff}$ comportant une couche guidante (14) et un nombre N de régions (20a, 20b) échelonnées le long de la direction perpendiculaire à l'axe de la lentille, présentant un indice de réfraction tel qu'au droit de ces régions, l'indice effectif du guide de lumière présente une valeur n'$_{eff}$ différente de n$_{eff}$ de façon qu'une onde lumineuse, susceptible de se propager au droit de ces régions (20a, 20b) acquière un déphasage Δφ, fonction de la longueur, mesurée selon la direction de l'axe de la lentille, desdites régions, dû à la différence d'indice effectif n'$_{eff}$ — n$_{eff}$ et permettant d'obtenir des interférences lumineuses constructives, au point image choisi, caractérisée en ce que les régions présentent la forme de portions de ménisques convexes ou concaves de longueur L(r) mesurée selon la direction de l'axe de la lentille et dépendant continuement de la distance r à l'axe (11) de la lentille, en ce qu'elles sont implantées à l'intérieur de la couche guidante (14) et en ce que la différence entre les déphasages maximal et minimal acquis dans chaque région est de 2π.

2. Lentille de Fresnel selon la revendication 1, caractérisée en ce que le guide de lumière (12, 14, 16) est constitué par du niobate de lithium.

3. Lentille de Fresnel selon l'une quelconque des revendications 1 et 2, caractérisée en ce que les régions (20b) présentent une longueur L(r) dépendante de la distance r à l'axe (11) de la lentille avec :

(a)
$$L(r) = mL_0 - \frac{L_0}{\lambda_0} \left[ \sqrt{r^2 + p'^2} - p' + \sqrt{r^2 + p^2} - p \right]$$

formule dans laquelle p, respectivement p' représente la distance entre le point objet, respectivement le point image et la lentille, $\lambda_0$ la longueur d'onde dans le vide de l'onde lumineuse utilisée, $L_0$ la longueur maximale, et m un nombre entier positif variant successivement de 1 à N.

4. Lentille de Fresnel selon l'une quelconque des revendications 1 et 2, caractérisée en ce que les régions (20b) présentent une longueur L(r) dépendante de la distance r à l'axe (11) de la lentille avec :

$$(b) \qquad L(r) = mL_0 + \frac{L_0}{\lambda_0} \left[ \sqrt{r^2 + p'^2} - p' + \sqrt{r^2 + p^2} - p \right]$$

formule dans laquelle p, respectivement p', représente la distance entre le point objet, respectivement le point image et la lentille, $\lambda_0$ la longueur d'onde dans le vide de l'onde lumineuse utilisée, $L_0$ la longueur maximale, et m un nombre entier positif variant successivement de 1 à N.

5. Procédé de fabrication d'une lentille de Fresnel pour optique intégrée consistant à réaliser dans un substrat un guide de lumière (12, 14, 16) d'indice effectif $n_{eff}$ comportant une couche guidante (14) et à réaliser un nombre N de régions (20a, 20b) échelonnées le long de la direction perpendiculaire à l'axe de la lentille, présentant un indice de réfraction tel qu'au droit de ces régions, l'indice effectif du guide de lumière présente une valeur $n'_{eff}$ différente de $n_{eff}$ de façon qu'une onde lumineuse, susceptible de se propager au droit de ces régions (20a, 20b) acquière un déphasage $\Delta\varphi$, fonction de la longueur, mesurée selon la direction de l'axe de la lentille, desdites régions, dû à la différence d'indice effectif $n'_{eff} - n_{eff}$ et permettant d'obtenir des interférences lumineuses constructives, au point image choisi, caractérisé en ce que l'on réalise les N régions par implantation ionique dans la couche guidante (14) sous la forme de portions de ménisques convexes ou concaves de longueur L(r) mesurée selon la direction de l'axe de la lentille et dépendant continuement de la distance r à l'axe (11) de la lentille, la différence entre les déphasages maximal et minimal acquis dans chaque région étant de $2\pi$.

6. Procédé de fabrication selon la revendication 5, caractérisé en ce que les ions implantés sont des ions d'hélium.

7. Procédé de fabrication selon la revendication 5, caractérisé en ce que les ions implantés sont des ions de bore.

8. Procédé de fabrication selon l'une quelconque des revendications 5 à 7, caractérisé en ce que l'on réalise l'implantation d'ions à travers un masque (18) déposé à la surface du guide de lumière (12, 14, 16).

9. Procédé de fabrication selon la revendication 6, caractérisé en ce que le nombre d'ions implantés par centimètre carré de substrat est compris entre $10^{15}$ et $10^{16}$.

10. Procédé de fabrication selon l'une quelconque des revendications 5 à 9, caractérisé en ce que l'on attaque chimiquement les régions 20.

11. Procédé de fabrication selon la revendication 10, caractérisé en ce que l'on réalise l'attaque chimique avec de l'acide fluorhydrique dilué, dans le cas d'un substrat en niobate de lithium.

**Claims**

1. A Fresnel lens for integrated optics comprising a light guide (12, 14, 16) with effective index $n_{eff}$ having a guide layer (14), and a number N of regions (20a, 20b) distributed lengthways in a direction perpendicular to the lens axis and having a refractive index such that the effective index of the light guide beyond those regions has a value $n'_{eff}$ differing from $n_{eff}$, such that a light wave adapted for propagation through those regions (20a, 20b) acquires a phase shift $\Delta\varphi$, a function of the length of the regions measured along the lens axis, due to the difference in effective indices $n'_{eff} - n_{eff}$, and permitting the formation of interference from a predetermined point image, characterised in that the regions have the form of convex or concave meniscus portions of length L(r) measured along the lens axis and depending continuously on the distance r from the lens axis (11), and in that they are implanted within the guide layer (14) and in that the difference between the maximum and minimum phase shift produced within said region is $2\pi$.

2. Fresnel lens according to claim 1, characterised in that the light guide (12, 14, 16) is formed from lithium niobate.

3. Fresnel lens according to either of claims 1 and 2, characterised in that the regions (20b) have a length L(r) depending on the distance r from the axis such that

$$(a) \qquad L(r) = mL_0 - \frac{L_0}{\lambda_0} \left[ \sqrt{r^2 + p'^2} - p' + \sqrt{r^2 + p^2} - p \right]$$

in which p and p' represent the distance between the point object and respectively the point image and the lens, $\lambda_0$ represents the wavelength in vacuo of the light wave employed, $L_0$ represents the maximum length, and m represents a positive integer varying successively from 1 to N.

4. Fresnel lens according to either of claims 1 and 2, characterised in that the regions (20b) have a length L(r) depending on the distance r from the axis such that

(b)
$$L(r) = mL_0 + \frac{L_0}{\lambda_0} \left[ \sqrt{r^2 + p'^2} - p' + \sqrt{r^2 + p^2} - p \right]$$

in which p and p' represent the distance between the point object and respectively the point image and the lens, $\lambda_0$ represents the wavelength in vacuo of the light wave employed, $L_0$ represents the maximum length, and m represents a positive integer varying successively from 1 to N.

5. A process for the manufacture of a Fresnel lens for integrated optics which comprises forming in a substrate, a light guide (12, 14, 16) with effective index $n_{eff}$ having a guide layer (14) and forming a number N of regions (20a, 20b) distributed lengthways in a direction perpendicular to the lens axis and having a refractive index such that the effective index of the light guide beyond those regions has a value $n'_{eff}$ differing from $n_{eff}$ such that a light wave adapted for propagation beyong those regions, acquires a phase shift $\Delta\varphi$, a function of the length of the regions along the lens axis, due to the difference in effective indices $n'_{eff} - n_{eff}$, and permitting the formation of interference from a predetermined point image, characterised in that the N regions are produced by ion implantation in the guide layer (14) in the form of convex or concave meniscus portions of length L(r) measured along the lens axis and depending continuously on the distance r from the lens axis (11), the difference between the maximum and minimum phase shift produced within said region being $2\pi$.

6. A manufacturing process according to claim 5 characterised in that the implanted ions are helium ions.

7. A manufacturing process according to claim 5 characterised in that the implanted ions are boron ions.

8. A manufacturing process according to any of claims 5 to 7 characterised in that ion implantation is achieved through a mask (18) deposited on the surface of the light guide (12, 14, 16).

9. A manufacturing process according to claim 6 characterised in that the number of ions implanted is between $10^{15}$ and $10^{16}$ per square centimetre of the substrate.

10. A manufacturing process according to any of claims 5 to 9 characterised in that the regions (20) are subjected to chemical attack.

11. A manufacturing process according to claim 10 characterised in that the chemical attack is carried out with dilute hydrofluoric acid on a lithium niobate substrate.


**Patentansprüche**


1. Fresnel'sche Linse für integrierte Optik mit einem einen effektiven Brechungsindex $n_{eff}$ aufweisenden Lichtleiter (12, 14, 16), der eine Führungsschicht (14) und eine Anzahl N von Bereichen (20a, 20b) aufweist, die längs der senkrecht zu der Linsenachse verlaufenden Richtung gestaffelt sind, einen solchen Brechungsindex aufweisen, daß längs dieser Bereiche der effektive Brechungsindex des Lichtleiters einen von $n_{eff}$ unterschiedlichen Wert $n'_{eff}$ derart aufweist, daß eine Lichtwelle, die sich gerade durch diese Bereiche (20a, 20b) fortpflanzen kann, eine Phasenverschiebung $\Delta\varphi$, die eine Funktion der längs der Richtung der Linsenachse gemessenen Länge dieser Bereiche ist, aufgrund des effektiven Brechungsindexunterschiedes $n'_{eff} - n_{eff}$ erhält, und ermöglichen, konstruktive Lichtinterferenzen an dem gewählten Bildpunkt zu erreichen, dadurch gekennzeichnet, daß die Bereiche die Form von konvexen oder konkaven Meniskusabschnitten mit der Länge L(r) aufweisen, die in Richtung der Linsenachse gemessen ist und fortlaufend von dem Abstand r zur Linsenachse (11) abhängt, daß die Bereiche in das Innere der Führungsschicht (14) implantiert sind und daß der Unterschied der in jedem Bereich erhaltenen maximalen und minimalen Phasenverschiebung $2\pi$ ist.

2. Fresnel'sche Linse nach Anspruch 1, dadurch gekennzeichnet, daß der Lichtleiter (12, 14, 16) von Lithiumniobat gebildet ist.

3. Fresnel'sche Linse nach Anspruch 1 oder 2, dadurch gekennzeichnet, daß die Bereiche (20b) eine Länge L(r) aufweisen, die von dem Abstand r von der Linsenachse (11) abhängt :

(a)
$$L(r) = mL_0 - \frac{L_0}{\lambda_0} \left[ \sqrt{r^2 + p'^2} - p' + \sqrt{r^2 + p^2} - p \right]$$

mit p bzw. p' dem Abstand zwischen dem Gegenstandspunkt bzw. dem Bildpunkt und der Linse, $\lambda_0$ der Wellenlänge der verwendeten Lichtwelle im Vakuum, $L_0$ der maximalen Länge und m einer ganzen positiven Zahl, die sich aufeinanderfolgend von 1 bis N ändert.

4. Fresnel'sche Linse nach Anspruch 1 oder 2, dadurch gekennzeichnet, daß die Bereiche (20b) eine Länge L(r) aufweisen, die von dem Abstand r von der Linsenachse (11) abhängt :

.(b)
$$L(r) = mL_0 + \frac{L_0}{\lambda_0} \left[ \sqrt{r^2 + p'^2} - p' + \sqrt{r^2 + p^2} - p \right]$$

mit p bzw. p' dem Abstand zwischen dem Gegenstandspunkt bzw. dem Bildpunkt und der Linsae, $\lambda_0$ der

Wellenlänge der verwendeten Lichtwelle im Vakuum, $L_0$ der maximalen Länge und m einer ganzen positiven Zahl, die sich aufeinanderfolgend von 1 bis N ändert.

5. Verfahren zur Herstellung einer Fresnel'schen Linse für integrierte Optik, bei dem in einem Substrat ein Lichtleiter (12, 14, 16) mit effektivem Brechungsindex $n_{eff}$, der eine Führungsschicht (14) aufweist, hergestellt wird und eine Anzahl N von Bereichen (20a, 20b) hergestellt wird, die längs der zu der Linsenachse senkrechten Richtung gestaffelt sind, einen solchen Brechungsindex aufweisen, daß durch diese Bereiche geradehindurch der Brechungsindex des Lichtleiters einen von $n_{eff}$ unterschiedlichen Wert $n'_{eff}$ derart aufweist, daß eine Lichtwelle, die sich in diesen Bereichen (20a, 20b) geradeaus fortpflanzen kann, eine Phasenverschiebung $\Delta\varphi$, die eine Funktion der in Richtung der Linsenachse gemessenen Länge der Bereiche ist, aufgrund des effektiven Brechungsindexunterschiedes $n'_{eff} - n_{eff}$ erhält, und ermöglichen, konstruktive Lichtinterferenzen am gewählten Bildpunkt zu erreichen, dadurch gekennzeichnet, daß man die N-Bereiche durch Ionenimplantation in der Führungsschicht (14) in Form von konvexen oder konkaven Meniskusabschnitten mit der Länge L(r) herstellt, die in Richtung der Linsenachse gemessen wird und fortlaufend von dem Abstand r von der Linsenachse (11) abhängt, wobei der Unterschied zwischen der maximalen und minimalen Phasenverschiebung $2\pi$ ist, die in jedem Bereich erhalten worden sind.

6. Herstellungsverfahren nach Anspruch 5, dadurch gekennzeichnet, daß die implantierten Ionen Heliumionen sind.

7. Herstellungsverfahren nach Anspruch 5, dadurch gekennzeichnet, daß die implantierten Ionen Borionen sind.

8. Herstellungsverfahren nach einem der Ansprüche 5 bis 7, dadurch gekennzeichnet, daß die Ionenimplantation durch eine Maske (18) hindurch durchgeführt wird, die auf die Oberfläche des Lichtleiters (12, 14, 16) aufgebracht wird.

9. Herstellungsverfahren nach Anspruch 6, dadurch gekennzeichnet, daß die Anzahl der implantierten Ionen pro Quadratzentimeter des Substrats zwischen $10^{15}$ und $10^{16}$ liegt.

10. Herstellungsverfahren nach einem der Ansprüche 5 bis 9, dadurch gekennzeichnet, daß man die Bereiche (20) chemisch angreift.

11. Herstellungsverfahren nach Anspruch 10, dadurch gekennzeichnet, daß der chemische Angriff mit verdünnter Fluorwasserstoffsäure im Falle eines Substrats aus Lithiomniobat durchgeführt wird.

FIG. 1

FIG. 2a

FIG. 2b

ⓐ

14

12

16

ⓑ

18

14

12

16

ⓒ

18

20

h

14

12

16

**FIG. 3**

ⓓ

20

14

$L_0$

h

12

16

ⓔ

21

14

12

16

FIG. 4

FIG. 5

$L_0$

20a

22a

20a

FIG. 6a

14

12

16

$L_0$

22b

20b

FIG. 6b

14

20b

12

16